# FASCICULE DE BREVET EUROPEEN

(11) **EP 2 311 324 B1**
(45) Date de publication et mention de la délivrance du brevet: **10.12.2014**
(21) Numéro de dépôt: 10194343.9
(22) Date de dépôt: 15.02.2006
(51) Int. Cl.: A23G 9/10, A23G 9/12, A23G 9/22

(54) **Sorbetiere a utilisation simplifiee**
Eismaschine, die einfach benutzt werden kann
Ice-cream maker of simplified use

(30) Priorité: 16.02.2005 FR 0501573
(43) Date de publication de la demande: 20.04.2011
(62) Demande divisionnaire de: 06709323.7
(73) Titulaire: Seb S.A., 69130 Ecully (FR)
(72) Inventeur: Perrier, Matthieu, 65310, LALOUBERE (FR); Rouches, Alexandre, 65310, HORGUES (FR); Cypres, Régis, 65100, LOURDES (FR); Fiedos, Hervé, 65310, ODOS (FR)
(74) Mandataire: Cémeli, Eric Philippe Laurent

(56) Documents cités:
- EP-A- 0 285 213
- GB-A- 2 144 208
- GB-A- 2 187 110
- US-A- 3 780 536
- US-A- 5 022 315

## Description

La présente invention se rapporte à la réalisation de préparations glacées dans un récipient à double paroi. La présente invention concerne le domaine technique général des sorbetières comportant un récipient à double paroi, dans lequel est réalisée la prise en glace d'une préparation.

Le récipient à double paroi forme un logement contenant un mélange à changement de phase. Si désiré, une ou plusieurs entretoises peuvent être prévues entre la paroi interne et la paroi externe du récipient. Le mélange à changement de phase est apte à occuper un premier état physique dit état basse température, lorsque le récipient est placé dans un congélateur, et un deuxième état physique, dit état haute température, lorsque le récipient est placé à température ambiante. La transition de phase entre l'état basse température et l'état haute température s'effectue à une température inférieure à la température de congélation d'un mélange aqueux ou crémeux, pour obtenir un sorbet ou une crème glacée.

Préalablement à la réalisation d'une préparation glacée, l'utilisateur place d'abord le récipient dans un congélateur, pour amener le mélange à changement de phase à l'état basse température. Pour la réalisation de la préparation glacée, l'utilisateur met en marche la sorbetière et verse un mélange aqueux ou crémeux dans le récipient. Au contact de la paroi intérieure du récipient, le mélange aqueux ou crémeux se transforme en glace. Une pale venant racler la paroi permet de décoller la glace formée et de la remettre en suspension dans le mélange, jusqu'à ce que l'ensemble de la préparation soit glacé. Notamment, la pale peut être entraînée en rotation par rapport à un récipient maintenu fixe, ou le récipient peut être entraîné en rotation par rapport à la pale maintenue fixe.

Usuellement, la préparation réalisée dans le récipient à double paroi est réalisée en quantité assez importante formant plusieurs portions. La préparation glacée est alors servie hors du récipient à double paroi.

Il est connu du document JP 2000 050 810 une sorbetière comportant plusieurs récipients à double paroi présentant une capacité d'environ 150 ml. Une telle capacité est adaptée à une portion individuelle. Une pale est agencée dans chacun des récipients à double paroi. La sorbetière comporte un boîtier contenant un mécanisme d'entraînement apte à générer un mouvement de rotation d'une pale par rapport au récipient à double paroi. Toutefois l'utilisateur doit retirer au moins une partie du boîtier ainsi que la pale pour pouvoir récupérer le récipient à double paroi contenant la préparation glacée. L'utilisation d'une telle sorbetière reste contraignante.

Les documents GB2187110, US3780536, GB144208 divulguent des sorbetières comportant des pales entraînées en rotation dans un récipient à double paroi. Les pales sont montées sur des couvercles prévus pour fermer lesdits récipients.

Une sorbetière selon le préambule de la revendication 1 est connue du document US 5 022 315.

Un objet de la présente invention est de proposer une sorbetière présentant une utilisation moins contraignante.

Un autre objet de la présente invention est de proposer une sorbetière permettant de faciliter la consommation de la préparation.

Un autre objet de la présente invention est de proposer une sorbetière présentant une construction compacte.

Un autre objet de la présente invention est de proposer une sorbetière présentant une construction plus économique.

Ces objets sont atteints avec une sorbetière comprenant une pale agencée dans un récipient à double paroi, et un boîtier contenant un mécanisme d'entraînement apte à générer un mouvement de rotation de la pale par rapport au récipient à double paroi, le récipient à double paroi comportant une paroi extérieure et une paroi intérieure définissant un logement contenant un mélange à changement de phase présentant une plage de fusion s'étendant au moins partiellement en dessous de 0°C, la paroi intérieure formant une cuve, la pale étant prévue pour racler la paroi intérieure, le boîtier comportant un organe de support, la pale étant montée sur l'organe de support, du fait que le boîtier forme un socle, que l'organe de support s'étend au dessus du socle, et que le mécanisme d'entraînement comporte une sortie d'entraînement agencée sur le socle et coopérant avec un organe d'entraînement du récipient à double paroi. Ces dispositions permettent de simplifier l'utilisation de la sorbetière en limitant les manipulations. La mise en place du récipient à double paroi et de la pale sont aisés. Après réalisation de la préparation glacée, l'utilisateur retire la pale et le récipient à double paroi, et peut consommer directement la préparation glacée dans le récipient à double paroi.

Avantageusement alors l'organe de support est formé par un bras de support. Cette disposition permet d'améliorer la visibilité du contenu du récipient à double paroi.

Avantageusement encore, le boîtier présente par rapport au socle une ouverture latérale prévue pour la mise en place ou le retrait du récipient de travail. Cette disposition permet de simplifier la construction de l'appareil. Cette disposition permet aussi de rendre l'utilisation de l'appareil très conviviale.

Avantageusement encore, le boîtier présente par rapport au socle une ouverture supérieure prévue pour la mise en place ou le retrait de la pale. Cette disposition permet également de simplifier la construction de l'appareil. Cette disposition permet aussi de rendre l'utilisation de l'appareil très conviviale, l'utilisateur pouvant directement observer la réalisation de la préparation glacée.

Avantageusement alors la pale est décentrée par rapport au récipient à double paroi. En d'autres termes, la cuve est raclée essentiellement par un seul des bords latéraux de la pale. Cette disposition permet de réduire la taille de la pale et de faciliter la consommation de la préparation glacée.

Avantageusement encore, la pale présente une forme conjuguée à la forme de la paroi intérieure. Cette disposition permet de racler la paroi intérieure sur une hauteur plus importante.

Avantageusement encore, une moitié inférieure de la cuve définit un chemin annulaire, la pale présentant une extrémité prévue pour racler le chemin annulaire. Cette disposition permet d'augmenter la surface de la cuve raclée par la pale, tout en contribuant à assurer un guidage de la pale.

Avantageusement encore, la pale est disposée dans le récipient à double paroi avec un angle aigu par rapport à la perpendiculaire à la paroi intérieure. Cette disposition permet de faciliter le raclage de la cuve par la pale.

Avantageusement encore, la pale comporte un manche apte à être engagé dans une conformation de retenue de travail du boîtier. Cette disposition permet de simplifier la manipulation de la pale.

Avantageusement alors, le manche est engagé dans la conformation de retenue de travail transversalement par rapport à l'axe de révolution du récipient à double paroi. De préférence, le manche est engagé dans la conformation de retenue de travail radialement par rapport à l'axe de révolution du récipient à double paroi.

Avantageusement encore le manche présente des moyens de blocage axial de la pale par rapport au boîtier. Cette disposition permet d'exercer un effort de raclage sur la partie inférieure de la cuve.

Avantageusement encore le manche présente des moyens de blocage transversal de la pale par rapport au boîtier. Cette disposition permet d'exercer un effort de raclage sur la paroi latérale de la cuve.

Avantageusement encore, la paroi extérieure et la paroi intérieure sont réalisées en matière plastique. Une sorbetière comportant un tel récipient est tout d'abord d'une construction plus économique, la matière plastique utilisée pour la paroi intérieure étant peu onéreuse. De plus une telle matière est inerte par rapport au mélange à changement de phase contenu dans le logement. De plus, la transmission des calories de la préparation vers le mélange à changement de phase étant moins rapide, l'adhésion de la couche de glace formée sur la paroi intérieure est moindre. Toute la préparation peut être consommée.

Avantageusement encore, le volume de la cuve est inférieur ou égal à 200 ml. Un tel volume convient bien pour la consommation individuelle. Avantageusement alors le volume de la cuve est compris entre 80 et 120 ml. Avantageusement encore la sorbetière comprend une deuxième pale agencée dans un deuxième récipient à double paroi, le mécanisme d'entraînement étant apte à réaliser un mouvement de rotation de la deuxième pale par rapport au deuxième récipient à double paroi. Pour augmenter le volume de préparation glacée un deuxième récipient à double paroi est préférable à une cuve de capacité plus importante.

Selon un premier type de réalisation, le mécanisme d'entraînement est associé à un moteur agencé dans le boîtier. La sorbetière forme alors un appareil autonome. Le moteur peut notamment être alimenté sur secteur ou sur batteries.

Selon un deuxième type de réalisation, le mécanisme d'entraînement comporte un axe d'entraînement. La sorbetière forme alors un accessoire pouvant être utilisé avec une motorisation extérieure.

L'invention sera mieux comprise à l'étude des deux exemples de réalisation suivants, pris à titre nullement limitatif, illustré dans les figures annexées, dans lesquelles :
- la figure 1 est une vue en perspective d'un premier exemple de réalisation d'une sorbetière comportant deux récipients à double paroi, représentée accompagnée de deux récipients à double paroi additionnels,
- la figure 2 est une vue en coupe verticale de la sorbetière illustrée à la figure 1, dans laquelle un des récipients à double paroi et la pale associée ont été retirés du boîtier de l'appareil,
- la figure 3 est une vue en perspective en éclaté de la sorbetière illustrée aux figures 1 et 2, montrant les récipients à double paroi et les pales hors du boîtier de l'appareil,
- la figure 4 est une vue en coupe d'un récipient à double paroi appartenant à la sorbetière illustrée aux figures 1 à 3,
- la figure 5 est une vue en éclaté du récipient à double paroi illustré à la figure 4.
- la figure 6 est une vue en perspective d'un deuxième exemple de réalisation d'une sorbetière comportant deux récipients à double paroi,
- la figure 7 est une vue en perspective en éclaté de la sorbetière illustrée à la figure 6, montrant les récipients à double paroi et les pales hors du boîtier de l'appareil,
- la figure 8 est une vue en coupe verticale de la sorbetière illustrée à la figure 6, dans laquelle un des récipients à double paroi et la pale associée ont été retirés du boîtier de l'appareil,
- la figure 9 est une vue de dessus de la sorbetière illustrée à la figure 6,
- la figure 10 est une vue en perspective d'un élément du boîtier de la sorbetière illustrée aux figures 6 et 7,
- la figure 11 est une vue en perspective arrière d'une des pales de la sorbetière illustrée aux figures 6 à 9,
- la figure 12 est une vue en coupe d'un récipient à double paroi appartenant à la sorbetière illustrée aux figures 6 à 9,
- la figure 13 est une vue en éclaté du récipient à double paroi illustré à la figure 12.

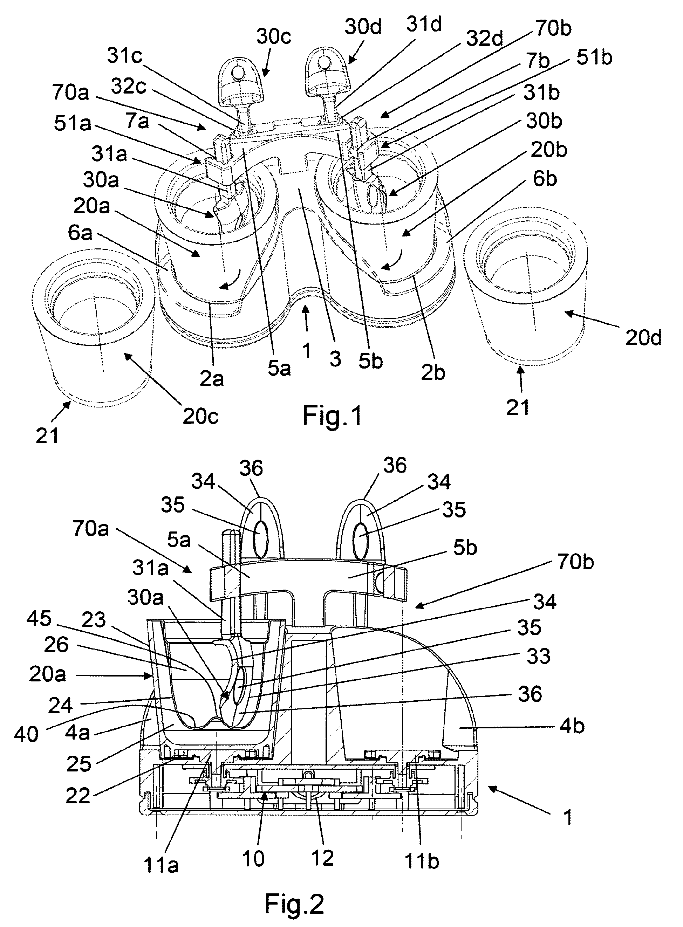

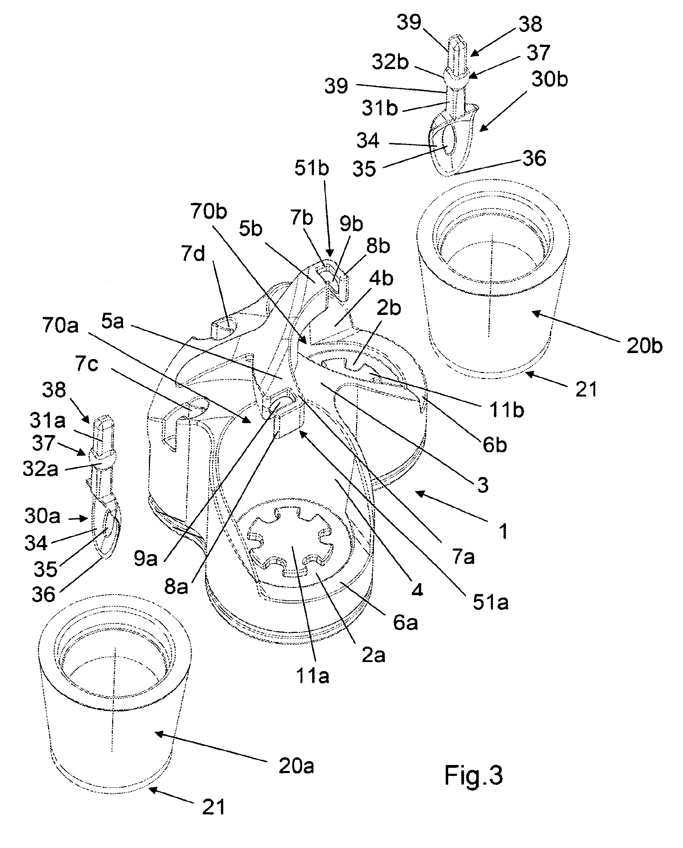

La sorbetière illustrée aux figures 1 à 3 comprend un boîtier 1 formant deux socles 2a, 2b. Un montant 3 est agencé entre les socles 2a, 2b. Une paroi latérale 4a, 4b entoure partiellement chaque socle 2a, 2b. Les parois latérales 4a, 4b sont issues du montant 3. Le boîtier 1 comporte deux bras de support 5a, 5b s'étendant chacun au-dessus d'un des socles 2a, 2b. Les bras de support 5a, 5b sont issus du montant 3.

Tel qu'illustré à la figure 1, chaque socle 2a, 2b est prévu pour recevoir un récipient à double paroi 20a, 20b. Des récipients à double paroi 20c, 20d supplémentaires peuvent également être prévus. Les récipients à double paroi 20a, 20b, 20c, 20d sont interchangeables. Les parois latérales 4a, 4b ménagent des ouvertures latérales 6a, 6b prévues pour la mise en place ou le retrait des récipients à double paroi 20a, 20b, 20c, 20d sur les socles 2a, 2b.

Le boîtier 1 comporte deux organes de support 51 a, 51 b s'étendant chacun au au-dessus d'un des socles 2a, 2b. Les organes de support 51 a, 51 b sont formés chacun par un des bras de support 5a, 5b.

Le boîtier 1 présente deux conformations de retenue de travail 7a, 7b agencées chacune au-dessus d'un des socles 2a, 2b. Ainsi chaque conformation de retenue de travail 7a, 7b est agencée au-dessus d'un des récipients à double paroi 20a, 20b mis en place sur le boîtier 1. Les conformations de retenue de travail sont issues des organes de support 51 a, 51 b. Chaque conformation de retenue de travail 7a, 7b est ménagée sur l'un des bras de support 5a, 5b. Ainsi chaque conformation de retenue de travail 7a, 7b est ménagée sur un des organes de support 51 a, 51 b.

Plus particulièrement chaque conformation de retenue de travail 7a, 7b comporte un organe de retenue 8a, 8b déformable. Une partie concave 9a, 9b est ménagée dans chacune des conformations de retenue de travail 7a, 7b.

Le boîtier 1 présente deux conformations de retenue de rangement 7c, 7d. Plus particulièrement, les conformations de retenue de rangement 7c, 7d sont agencées à l'arrière du boîtier 1.

Les conformations de retenue de travail 7a, 7b et les conformations de retenue de rangement 7c, 7d sont prévues pour recevoir chacune une pale 30a, 30b, 30c, 30d. Tel que visible sur la figure 1, chacune des pales 30a, 30b est montée sur un des organes de support 51 a, 51 b.

Tel que représenté sur la figure 1, les pales 30a, 30b engagées dans les conformations de retenue de travail 7a, 7b sont agencées dans l'un des récipients à double paroi 20a, 20b en place sur le socle 2a, 2b correspondant. Les deux pales 30c, 30d supplémentaires sont engagées dans les conformations de retenue de rangement 7c, 7d. Les pales 30a, 30b, 30c, 30d sont interchangeables. Tel que bien visible sur la figure 1, les parois latérales 4a, 4b et les bras de support 5a, 5b ménagent des ouvertures supérieures 70a, 70b prévues pour la mise en place ou le retrait des pales 30a, 30b dans les récipients à double paroi 20a, 20b.

Chaque pale 30a, 30b, 30c, 30d comporte un manche 31 a, 31 b, 31 c, 31 d apte à être engagé dans l'une quelconque des conformations de retenue de travail 7a, 7b et des conformations de retenue de rangement 7c, 7d. Plus particulièrement, chacun des manches 31 a, 31 b, 31 c, 31 d comporte une zone épaissie 32a, 32b, 32c, 32d apte à être logée dans la partie concave 9a, 9b d'une des conformations de retenue de travail 7a, 7b. Chaque manche 31 a, 31 b, 31 c, 31 d présente des moyens de blocage axial 37 de la pale 30a, 30b, 30c, 30d par rapport au boîtier 1, formés par la zone épaissie 32a, 32b, 32c, 32d, et des moyens de blocage transversal de la pale 30a, 30b, 30c, 30d par rapport au boîtier 1, formés par la section carrée 39 au dessus et en dessous de la zone épaissie 32a, 32b, 32c, 32d.

Le boîtier 1 contient un mécanisme d'entraînement 10 apte à générer un mouvement de rotation d'au moins une des pales 30a, 30b, 30c, 30d par rapport à l'un des récipients à double paroi 20a, 20b, 20c, 20d en place sur le socle 2a, 2b correspondant.

Plus particulièrement, les pales 30a, 30b sont maintenues par le boîtier 1, et le mécanisme d'entraînement 10 est apte à entraîner en rotation les récipients à double paroi 20a, 20b agencés sur le boîtier 1. A cet effet, tel que montré à la figure 2, le mécanisme d'entraînement 10 comporte deux sorties d'entraînement 11a, 11b, agencées chacune sur l'un des socles 2a, 2b. Les sorties d'entraînement 11a, 11b tournent dans le même sens. Le mécanisme d'entraînement 10 est associé à un moteur 12 agencé dans le boîtier 1. Chaque récipient à double paroi 20a, 20b, 20c, 20d comporte une partie inférieure 21 présentant un organe d'entraînement 22 apte à être entraîné en rotation par l'une des sorties d'entraînement 11 a, 11 b.

Tel qu'illustré sur la figure 1, les manches 31 a, 31 b des pales 30a, 30b agencées dans les récipients à double paroi 20a, 20b sont engagés dans la conformation de retenue de travail 7a, 7b correspondante transversalement par rapport à l'axe de révolution du récipient à double paroi 20a, 20b.

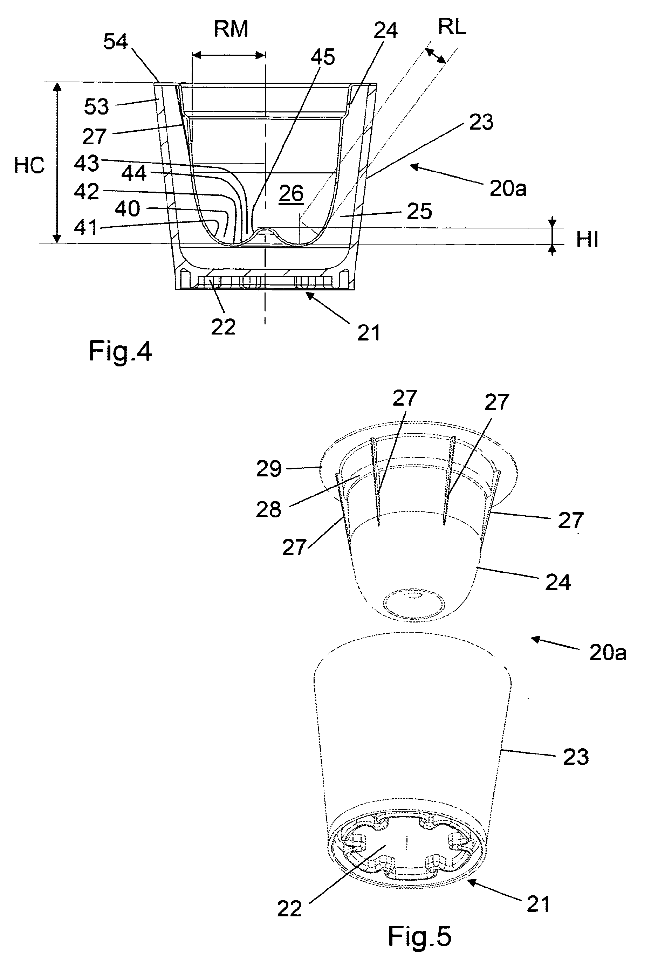

Les récipients à double paroi 20a, 20b, 20c, 20d, tels que le récipient à double paroi 20a illustré sur la figure 4, comportent une paroi extérieure 23 et une paroi intérieure 24 définissant un logement 25 contenant un mélange à changement de phase présentant une plage de fusion s'étendant au moins partiellement en dessous de 0°C. Le mélange à changement de phase présente avantageusement une plage de fusion s'étendant au moins partiellement en dessous de -8°C, et de manière préférée une plage de fusion s'étendant au moins partiellement entre -15° et -10°C. Le mélange à changement de phase est par exemple un mélange salin.

La paroi intérieure 24 est réalisée en matière plastique. Notamment, le PEHD, ou polyéthylène haute densité, présente des propriétés satisfaisantes. La paroi intérieure 24 présente avantageusement une épaisseur comprise entre 0,6 et 1 mm. De préférence, la paroi intérieure 24 présente une épaisseur comprise entre 0,7 et 0,9 mm. Si désiré la paroi intérieure 24 peut être revêtue.

La paroi extérieure 23 peut avantageusement être réalisée en matière plastique. Notamment, le PP, ou polypropylène, présente des propriétés satisfaisantes. La paroi extérieure 23 peut présenter une épaisseur plus importante que l'épaisseur de la paroi intérieure 24, par exemple de l'ordre de 2 à 3 mm, pour assurer une bonne rigidité au récipient à double paroi 20a, 20b, 20c, 20d, et aussi pour assurer un meilleur confort thermique lors de la préhension par l'utilisateur. De préférence la paroi intérieure 24 présente une épaisseur au moins deux fois inférieure à l'épaisseur de la paroi extérieure 23. Si désiré, l'utilisation d'agents expansants peut être envisagée pour la paroi extérieure 23.

Pour faciliter la préhension, la paroi extérieure 23 présente un diamètre inférieur à 12 cm.

La paroi intérieure 24 forme une cuve 26. Le volume de la cuve 26 est de préférence inférieur ou égal à 200 ml. Avantageusement, le volume de la cuve 26 est compris entre 80 et 120 ml.

La paroi intérieure 24 peut comporter des nervures externes 27 pour une meilleure rigidité. Un épaulement annulaire 28 ménagé en partie supérieure de la paroi intérieure 24 définit un niveau de remplissage de la cuve 26 et contribue aussi à la rigidité de la paroi intérieure 24. Une collerette supérieure 29 contribue encore à la rigidité de la paroi intérieure 24. Une telle géométrie peut être facilement obtenue par injection de matière plastique.

La paroi extérieure 23 présente un bord annulaire supérieur 53 assemblé avec une partie annulaire supérieure 54 de la paroi intérieure 24. La paroi extérieure 23 peut être assemblée avec la paroi intérieure 24 notamment par soudage à ultrasons. Le remplissage du logement 25 peut être effectué avant l'assemblage, ou après l'assemblage si la paroi extérieure 23 ou la paroi intérieure 24 comporte un orifice de remplissage susceptible d'être obturé par un bouchon. Après assemblage les récipients à double paroi 20a, 20b, 20c, 20d forment des corps monobloc.

Tel que bien visible sur les figures 2 et 4, la cuve 26 présente une géométrie de révolution. La cuve 26 présente une hauteur HC. La moitié inférieure de la cuve 26 présente un rayon maximal RM. Notamment, la moitié inférieure de la cuve 26 présente une géométrie de révolution au-delà d'un rayon égal à 1/2 du rayon maximal RM. La moitié inférieure de la cuve 26 présente, au-delà d'un rayon égal à 1/2 du rayon maximal RM, une épaisseur inférieure à l'épaisseur de la paroi extérieure 23.

La moitié inférieure de la cuve 26 définit un chemin annulaire 40 présentant une partie extérieure 41 s'étendant à partir d'un fond 42 entourant une partie intérieure 43. Le fond 42 définit la zone la plus basse du chemin annulaire 40. La courbure de la partie extérieure 41 varie selon la hauteur dans la cuve 26 et peut être définie par des rayons de courbure latérale RL, la valeur des rayons de courbure latérale RL évoluant avec la hauteur dans la cuve 26. Ainsi les rayons de courbure latérale RL de la partie extérieure 41 du chemin annulaire 40 sont supérieur(s) à 1/6 du rayon maximal RM de la moitié inférieure de la cuve 26. De plus la hauteur HI de la partie intérieure 43 du chemin annulaire 40 est inférieure à 1/2 de la hauteur HC de la cuve 26.

Plus particulièrement, la partie intérieure 43 du chemin annulaire 40 comporte une portion concave 44 prolongeant le fond 42. La courbure de la portion concave 44 varie selon la hauteur dans la cuve 26 et peut aussi être définie par des rayons de courbure latérale RL. Les rayons de courbure latérale RL de la portion concave 44 sont supérieurs à 1/6 du rayon maximal RM de la moitié inférieure de la cuve 26. La partie intérieure 43 du chemin annulaire 40 comporte une portion convexe 45 entourée par la portion concave 44. Le fond 42 du chemin annulaire 40 est agencé radialement sensiblement à la moitié du rayon maximal RM de la moitié inférieure de la cuve 26.

Tel que visible sur la figure 2, le chemin annulaire 40 est prévu pour recevoir une extrémité 36 de l'une des pales 30a, 30b, 30c, 30d.

Les pales 30a, 30b, 30c, 30d forment des cuillers. A cet effet chacune des pales 30a, 30b, 30c, 30d présente une partie concave 34 reliée au manche 31 a, 31 b, 31 c, 31 d. La partie concave 34 est pourvue d'une ouverture 35. Tel qu'illustré à la figure 2, l'une des pales 30a disposée dans l'un des récipients à double paroi 20a comporte un seul bord latéral 33 placé à proximité de la paroi intérieure 24. A cet effet la paroi intérieure 24 présente une forme de révolution. L'autre bord latéral est disposé dans la cuve 26 à distance de la paroi intérieure 24 sauf au niveau du chemin annulaire 40. Ainsi les pales 30a, 30b, 30c, 30d présentent une forme conjuguée à la forme de la paroi intérieure 24, pour assurer un raclage optimal de la préparation glacée.

Les pales 30a, 30b, 30c, 30d sont symétriques. Notamment, la partie concave 34 présente deux bords latéraux 33 symétriques. L'extrémité 36 des pales 30a, 30b, 30c, 30d est prévue pour racler le chemin annulaire 40.

Tel qu'illustré à la figure 1, la pale 30a est montée sur le bras de support 5a et la pale 30b est montée sur le bras de support 5b. Les pales 5a, 5b sont agencées perpendiculairement à la paroi intérieure 24.

Le boîtier 1 présente par rapport à chacun des socles 2a, 2b l'une des ouvertures latérales 6a, 6b prévues pour la mise en place ou le retrait d'un des récipients de travail 20a, 20b, 20c, 20d.

Le boîtier 1 présente par rapport à chacun des socles 2a, 2b l'une des ouvertures supérieures 70a, 70b prévues pour la mise en place ou le retrait d'une des pales 30a, 30b, 30c, 30d.

La paroi intérieure 24 peut présenter un état de surface plus granuleux ou plus rugueux que les pales 30a, 30b, 30c, 30d, pour éviter l'accrochage de la glace sur les pales 30a, 30b, 30c, 30d.

La présente réalisation fonctionne de la manière suivante.

L'utilisateur place préalablement un ou deux des récipients à double paroi 20a, 20b, 20c, 20d au congélateur, de manière à placer le mélange à changement de phase contenu dans le logement 25 dans l'état basse température. Le mélange à changement de phase devient ainsi réfrigérant.

Pour réaliser une préparation glacée, l'utilisateur place l'un des récipients à double paroi 20a, 20b, 20c, 20d préalablement refroidi sur l'un des socles 2a, 2b, verse la préparation dans la cuve 26, met en place le manche 31 a, 31 b, 31 c, 31 d d'une des pales 30a, 30b, 30c, 30d dans la conformation de retenue de travail 7a, 7b correspondante, et met en marche l'appareil pour que le récipient à double paroi agencé sur le boîtier 1 soit entraîné en rotation. Le manche 31 a, 31 b, 31 c, 31 d est engagé dans la conformation de retenue de travail 7a 7b transversalement par rapport à l'axe de révolution du récipient à double paroi 20a, 20b, 20c, 20d. La partie concave 34 de la pale 30a, 30b, 30c, 30d est alors disposée dans la cuve 26. La sortie d'entraînement 11a, 11 b agencée sur le socle 2a, 2b coopère avec l'organe d'entraînement 22 du récipient à double paroi 20a, 20b, 20c, 20d placé sur le socle 2a, 2b, tel que représenté à la figure 2 pour le récipient à double paroi 20a placé sur le socle 2a. Tel que bien visible sur la figure 1, les pales 30a ; 30b sont décentrées par rapport aux récipients à double paroi 20a ; 20b.

La figure 2 illustre la pale 30a prévue pour racler la paroi intérieure 24 après avoir été mise en place dans le récipient à double paroi 20a. L'élasticité du manche 31a permet de plaquer le bord latéral 33 contre la paroi intérieure 24. Ainsi la pale 30a exerce un effort contre la paroi intérieure 24, favorisant le décollage de la préparation glacée de la paroi intérieure 24.

La préparation contenue dans la cuve 26 est refroidie par le mélange à changement de phase présent dans le logement 25. La faible conductivité thermique de la matière plastique de la paroi intérieure 24 (0.5 W / m . K pour le PEHD contre 160 W / m . K pour l'aluminium) est compensée par l'épaisseur réduite de la paroi intérieure 24 et par le volume limité de la cuve 26, ainsi que par l'utilisation d'un mélange à changement de phase présentant une plage de fusion suffisamment basse. La prise de la préparation intervient moins rapidement qu'avec une paroi intérieure en aluminium. Ceci a pour avantage que le raclage de la préparation effectuée par la pale 30a, 30b agencée dans la cuve 26 peut être plus modéré. La puissance du moteur associé au mécanisme d'entraînement peut être limitée. Si l'utilisateur oublie de mettre en marche l'appareil avant de verser la préparation dans la cuve 26, le risque de prise en bloc de la préparation peut être évité. De plus la préparation continue à durcir modérément pendant une durée relativement longue, pouvant atteindre une heure. Ceci permet de prendre le temps pour la dégustation, sans qu'il soit nécessaire de transvaser la préparation.

La sorbetière proposée présente une utilisation plus conviviale, moins contraignante. Le temps nécessaire à la préparation est moindre que pour les appareils usuels présentant une cuve en aluminium d'une capacité de 1 litre. Plusieurs préparations successives peuvent être réalisées avec des jeux de récipients à double paroi préalablement refroidis. La mise en place des pales dans les récipients et le retrait des pales sont facilités. L'effet réfrigérant du mélange à changement de phase est progressif. Un raclage efficace peut être obtenu sur une partie importante de la surface de la cuve. La dégustation est facilitée.

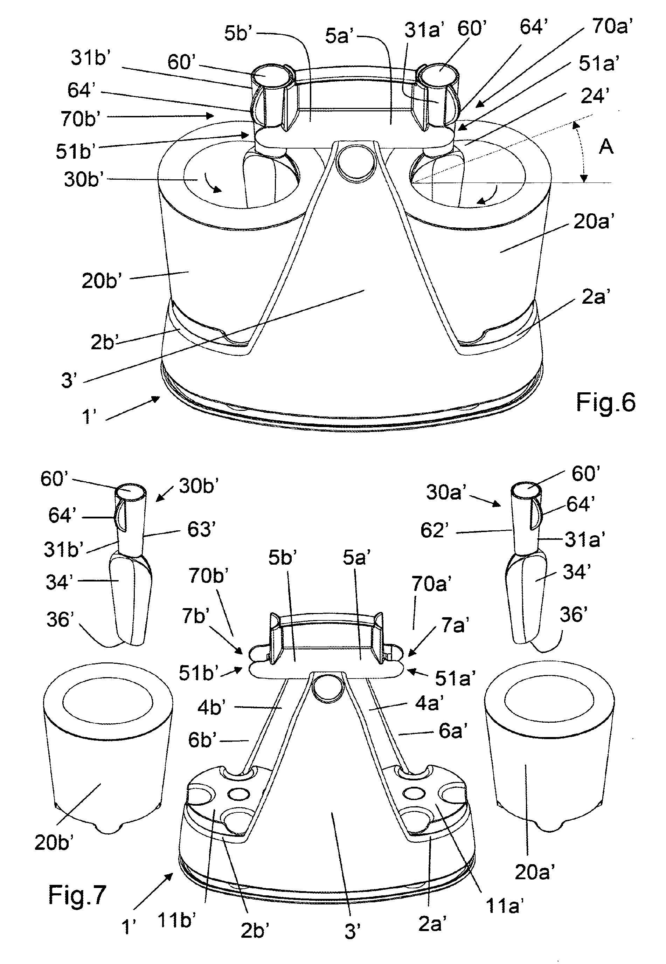

La sorbetière illustrée aux figures 6 à 9 reprend la plupart des éléments de la sorbetière illustrée aux figures 1 à 3, ces éléments étant désignés par les mêmes numéros complétés du signe ', avec toutefois les différences suivantes.

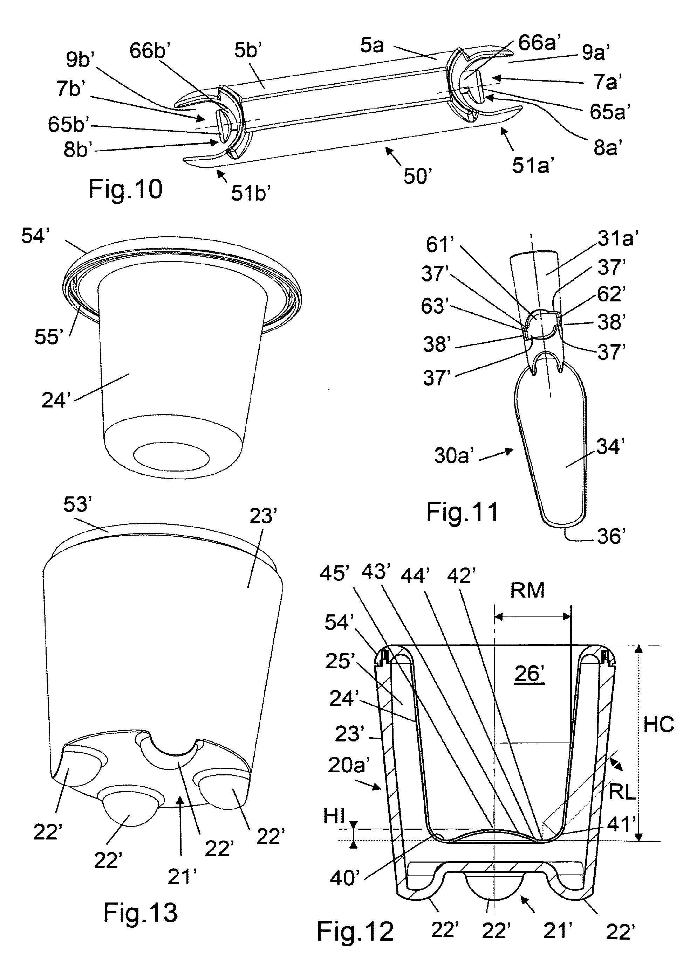

Le boîtier 1' comporte deux bras de support 5a', 5b' issus d'une pièce 50' illustrée à la figure 10. La pièce 50' est rapportée sur le montant 3'.

Le boîtier 1' présente deux conformations de retenue de travail 7a', 7b' agencées chacune au-dessus d'un des socles 2a', 2b'. chaque conformation de retenue de travail 7a', 7b' comporte un organe de retenue 8a', 8b' rigide. Une partie concave 9a', 9b' est ménagée dans chacune des conformations de retenue de travail 7a', 7b'.

Le boîtier 1' contient un mécanisme d'entraînement 10' apte à générer un mouvement de rotation d'au moins une des pales 30a', 30b' par rapport à l'un des récipients à double paroi 20a', 20b' en place sur le socle 2a', 2b' correspondant. Plus particulièrement, les pales 30a', 30b' sont maintenues par le boîtier 1', et le mécanisme d'entraînement 10' est apte à entraîner en rotation en sens inverse les récipients à double paroi 20a', 20b' agencés sur le boîtier 1'.

Les pales 30a', 30b' illustrées aux figures 7, 8 et 11 sont interchangeables. Chaque pale 30a', 30b' comporte un manche 31 a', 31 b' apte à être engagé dans l'une quelconque des conformations de retenue de travail 7a,' 7b'. Plus particulièrement, chacun des manches 31 a', 31 b' présente une géométrie de révolution au moins partielle, une cavité interne 60', un passage latéral d'introduction 61' (visible sur la figure 11) débouchant dans la cavité interne 60', deux organes de verrouillage 62', 63' prolongeant le passage latéral d'introduction 61', et un organe de manoeuvre 64'.

L'organe de manoeuvre 64' est agencé sur le manche 31 a', 31 b' à l'opposé du passage latéral d'introduction 61'. Les deux organes de verrouillage 62', 63' sont décalés en hauteur de manière à imposer une position de verrouillage précis lorsque les pales 30a', 30b' sont mises en place sur le boîtier 1'. A cet effet les organes de retenue 8a', 8b' comportent une butée 65a', 65b' prévue pour passer par le passage latéral d'introduction 61' et un tenon 66a', 66b' reliant la butée 65' au bras 5a', 5b'. Les tenons 66a', 66b' sont décalés en hauteur, le tenon 66a' étant prévu pour recevoir l'organe de verrouillage 62' et le tenon 66b' étant prévu pour recevoir l'organe de verrouillage 63'. De ce fait, les pales 30a', 30b' ne sont pas entièrement symétriques. Toutefois la partie concave 34' présente deux bords latéraux 33' symétriques. Chaque manche 31 a', 31 b' présente des moyens de blocage axial 37' de la pale 30a', 30b' par rapport au boîtier 1', formés par les bords supérieur et inférieur des organes de verrouillage 62', 63', et des moyens de blocage transversal 38' de la pale 30a', 30b' par rapport au boîtier 1', formés par l'extrémité latérale des organes de verrouillage 62', 63'.

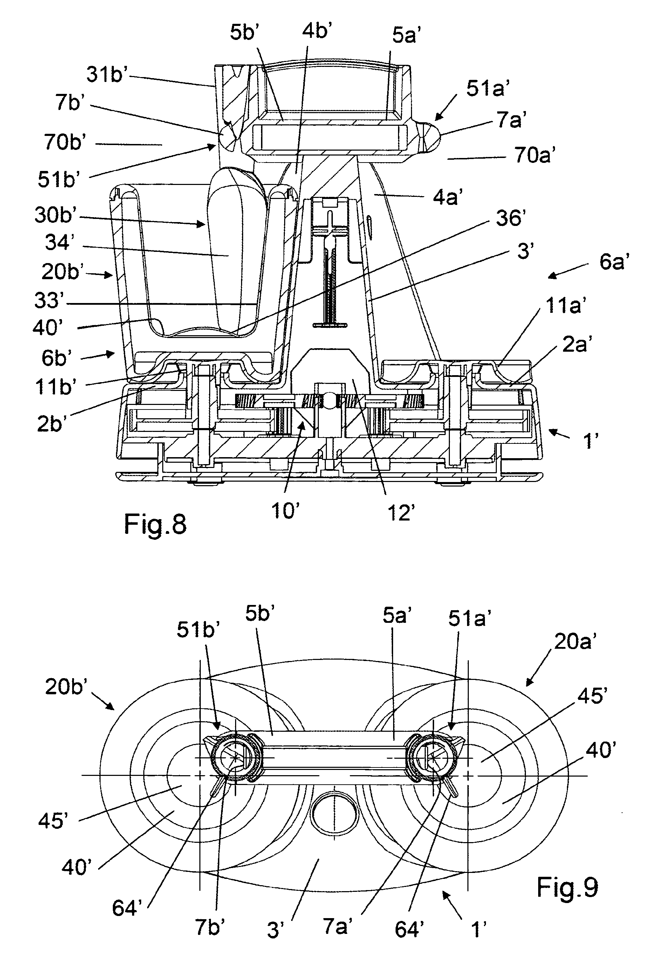

Les récipients à double paroi 20a', 20b', tels que le récipient à double paroi 20a' illustré sur les figures 12 et 13, comportent une paroi intérieure 24' dépourvue de nervures externes longitudinales et une paroi extérieure 23' présentant un bord annulaire supérieur 53' nervuré. Le bord annulaire supérieur 53' est assemblé avec une partie annulaire supérieure 54' de la paroi intérieure 24'. La partie annulaire supérieure 54' forme un bord supérieur retourné 55' nervuré en sa partie inférieure. La paroi extérieure 23' peut être assemblée avec la paroi intérieure 24', notamment par soudage par friction. La paroi intérieure 24' forme une cuve 26' présentant, à l'exception de la partie annulaire supérieure 54', une épaisseur inférieure à l'épaisseur de la paroi extérieure 23'. De préférence la cuve 26' présente, en dessous de la partie annulaire supérieure 54', une épaisseur au moins deux fois inférieure à l'épaisseur de la paroi extérieure 23'. Tel que représenté dans l'exemple de réalisation illustré aux figures 8 et 12, la cuve 26' présente, en dessous de la partie annulaire supérieure 54', une épaisseur trois fois inférieure à l'épaisseur de la paroi extérieure 23'.

La courbure de la partie extérieure 41' du chemin annulaire 40' est constante et peut être définie par un rayon de courbure latérale RL. Ainsi le rayon de courbure latérale RL de la partie extérieure 41' du chemin annulaire 40' est supérieur à 1/6 du rayon maximal RM de la moitié inférieure de la cuve 26'. De plus la hauteur HI de la partie intérieure 43' du chemin annulaire 40' est inférieure à 1/2 de la hauteur HC de la cuve 26'. La partie intérieure 43' du chemin annulaire 40' comporte une portion concave 44' prolongeant le fond 42'. La courbure de la portion concave 44' est constante et peut être définie par un rayon de courbure latérale RL. Le rayon de courbure latérale RL de la portion concave 44' est supérieur à 1/6 du rayon maximal RM de la moitié inférieure de la cuve 26'. La partie intérieure 43' du chemin annulaire 40' comporte une portion convexe 45' entourée par la portion concave 44'. Le fond 42' du chemin annulaire 40' est agencé radialement au-delà de la moitié du rayon maximal RM de la moitié inférieure de la cuve 26'.

Les pales 30a', 30b' forment des cuillers comportant une partie concave 34' dépourvue d'ouverture. Les pales 30a', 30b' sont disposées dans les récipients à double paroi 20a', 20'b avec un angle A aigu par rapport à la perpendiculaire à la paroi intérieure 24'. L'angle A est par exemple de l'ordre de 45°. Les pales 30a', 30b' sont symétriques et présentent une forme conjuguée à la forme de la paroi intérieure 24', pour assurer un raclage optimal de la préparation glacée.

Le principe de fonctionnement de la sorbetière illustrée aux figures 6 à 9 est voisin de celui de la sorbetière illustrée aux figures 1 à 3.

L'utilisateur met en place les récipients à double paroi 20a', 20b' sur les sorties d'entraînement 11 a', 11 b'. L'utilisateur place ensuite les pales 30a', 30b' dans les récipients à double paroi 20a', 20b', les translate vers les bras 5a', 5b' et les tourne pour bloquer l'un des organes de verrouillage 62', 63' avec le tenon 66a', 66b' correspondant. Tel que bien visible sur la figure 6, les pales 30a' ; 30b' sont décentrées par rapport aux récipients à double paroi 20a' ; 20b'. L'utilisateur peut verser la préparation dans les récipients à double paroi 20a', 20b' avant ou après la mise en place des pales 30a', 30b' ou la mise en marche du moteur 12'. L'angle A aigu associé à la cavité 34' des pales 30a', 30b' favorise le décollage de la préparation glacée de la paroi 24'. Lorsque la préparation est prête, l'utilisateur détache les pales 30a', 30b' en tournant les organes de manoeuvre 64', repousse ou retire les pales 30a', 30b', puis soulève et translate latéralement les récipients à double paroi 20a', 20b'. La préparation peut être directement consommée dans les récipients à double paroi 20a', 20b' à l'aide des pales 30a', 30b'. L'appareil est ainsi d'une utilisation particulièrement conviviale.

De préférence le ou les rayon(s) de courbure latérale RL de la partie extérieure 41 ; 41' du chemin annulaire 40 ; 40' est /sont supérieur(s) à 1/4 du rayon maximal RM de la moitié inférieure de la cuve 26 ; 26'.

De préférence encore la hauteur HI de la partie intérieure 43 ; 43' du chemin annulaire 40 ; 40' est inférieure à 1/4 de la hauteur HC de la cuve 26 ; 26'.

A titre de variante, la partie concave 34 ; 34' de la pale 30a ; 30b ; 30c ; 30d ; 30a', 30b' peut être disposée au moins partiellement dans la cuve 26 ; 26'.

A titre de variante, les pales peuvent être entraînées en rotation, les récipients à double paroi pouvant alors rester immobiles, ou non.

A titre de variante, les organes de supports 51 a, 51 b, 51 a', 51 b' ne sont pas nécessairement formés par des bras de support.

A titre de variante, plusieurs conformations de retenue de travail pourraient être agencées sur un même organe de support.

A titre de variante, la sorbetière peut ne comporter qu'une seule sortie d'entraînement, ou au contraire plus de deux sorties d'entraînement. Avantageusement alors le nombre d'organes de support est adapté au nombre de sorties d'entraînement.

A titre de variante, la sorbetière peut être dépourvue de moteur, le mécanisme d'entraînement comportant alors un axe d'entraînement prévu pour être entraîné par une motorisation extérieure.

A titre de variante, les récipients à double paroi 20a, 20b, 20c, 20d, 20a', 20b' ne sont pas nécessairement utilisés avec une sorbetière. L'utilisateur peut placer l'un des récipients à double paroi 20a, 20b, 20c, 20d, 20a', 20b' au congélateur et réaliser ensuite la préparation glacée en raclant la paroi intérieure 24, 24' avec un ustensile approprié.

A titre de variante, au moins une partie de la moitié inférieure de la paroi extérieure 23, 23' présente un diamètre inférieur à 12 cm.

La présente invention n'est nullement limitée aux exemples de réalisation décrits et à leurs variantes, mais englobe de nombreuses modifications dans le cadre des revendications.

## Revendications

1. Sorbetière comprenant une pale (30a ; 30b') agencée dans un récipient à double paroi (20a ; 20b'), et un boîtier (1 ; 1') contenant un mécanisme d'entraînement (10 ; 10') apte à générer un mouvement de rotation de la pale (30a ; 30b') par rapport au récipient à double paroi (20a ; 20b'), le récipient à double paroi (20a ; 20b') comportant une paroi extérieure (23 ; 23') et une paroi intérieure (24 ; 24') définissant un logement (25 ; 25') contenant un mélange à changement de phase présentant une plage de fusion s'étendant au moins partiellement en dessous de 0°C, la paroi intérieure (24 ; 24') formant une cuve (26 ; 26'), la pale (30a ; 30b') étant prévue pour racler la paroi intérieure (24 ; 24'), le boîtier (1 ; 1') comportant un organe de support (51a ; 51 b'), la pale (30a ; 30b') étant montée sur l'organe de support (51a ; 51 b'), **caractérisée en ce que** le boîtier (1 ; 1') forme un socle (2a ; 2b'), **en ce que** l'organe de support (51a ; 51b') s'étend au dessus du socle (2a ; 2b'), et **en ce que** le mécanisme d'entraînement (10 ; 10') comporte une sortie d'entraînement (11a ; 11b') agencée sur le socle (2a ; 2b') et coopérant avec un organe d'entraînement (22, 22') du récipient à double paroi (20a ; 20b').

2. Sorbetière selon la revendication 1, **caractérisée en ce que** l'organe de support (51a ; 51 b') est formé par un bras de support (5a ; 5b').

3. Sorbetière selon l'une des revendications 1 ou 2, **caractérisée en ce que** le boîtier (1 ; 1') présente par rapport au socle (2a ; 2b') une ouverture latérale (6a ; 6b') prévue pour la mise en place ou le retrait du récipient de travail (20a ; 20b').

4. Sorbetière selon l'une des revendications 1 à 3, **caractérisée en ce que** le boîtier (1 ; 1') présente par rapport au socle (2a ; 2b') une ouverture supérieure (70a ; 70b') prévue pour la mise en place ou le retrait de la pale (30a ; 30b').

5. Sorbetière selon l'une des revendications 1 à 4, **caractérisée en ce que** la pale (30a ; 30b') est décentrée par rapport au récipient à double paroi (20a ; 20b').

6. Sorbetière selon l'une des revendications 1 à 5, **caractérisée en ce que** la pale (30a ; 30b') présente une forme conjuguée à la forme de la paroi intérieure (24 ; 24').

7. Sorbetière selon l'une des revendications 1 à 6, **caractérisée en ce qu'**une moitié inférieure de la cuve (26 ; 26') définit un chemin annulaire (40 ; 40') et **en ce que** la pale (30a ; 30b') présente une extrémité (36 ; 36') prévue pour racler le chemin annulaire (40 ; 40').

8. Sorbetière selon l'une des revendications 1 à 7, **caractérisée en ce que** la pale (30b') est disposée dans le récipient à double paroi (20b') avec un angle (A) aigu par rapport à la perpendiculaire à la paroi intérieure (24').

9. Sorbetière selon l'une des revendications 1 à 8, **caractérisée en ce que** la pale (30a ; 30b') comporte un manche (31 a ; 31 b') apte à être engagé dans une conformation de retenue de travail (7a ; 7b') du boîtier (1 ; 1').

10. Sorbetière selon la revendication 9, **caractérisée en ce que** le manche (31 a ; 31 b') est engagé dans la conformation de retenue de travail (7a, 7b') transversalement par rapport à l'axe de révolution du récipient à double paroi (20a ; 20b').

11. Sorbetière selon l'une des revendications 9 ou 10, **caractérisée en ce que** le manche (31 a ; 31 b') présente des moyens de blocage axial (37 ; 37') de la pale (30a ; 30b') par rapport au boîtier (1 ; 1').

12. Sorbetière selon l'une des revendications 9 à 11, **caractérisée en ce que** le manche (31a ; 31b') présente des moyens de blocage transversal (38 ; 38') de la pale (30a ; 30b') par rapport au boîtier (1 ; 1').

13. Sorbetière selon l'une des revendications 1 à 12, **caractérisée en ce que** la paroi extérieure (23 ; 23') et la paroi intérieure (24 ; 24') sont réalisées en matière plastique.

14. Sorbetière selon l'une des revendications 1 à 13, **caractérisée en ce que** le volume de la cuve (26 ; 26') est inférieur ou égal à 200 ml.

15. Sorbetière selon la revendication 14, **caractérisée en ce que** le volume de la cuve (26 ; 26') est compris entre 80 et 120 ml.

16. Sorbetière selon l'une des revendications 1 à 15, **caractérisée en ce qu'**elle comprend une deuxième pale (30b ; 30a') agencée dans un deuxième récipient à double paroi (20b ; 20a'), le mécanisme d'entraînement (10 ; 10') étant apte à réaliser un mouvement de rotation de la deuxième pale (30b ; 30a') par rapport au deuxième récipient à double paroi (20b ; 20a').

17. Sorbetière selon l'une des revendications 1 à 16, **caractérisée en ce que** le mécanisme d'entraînement (10 ; 10') est associé à un moteur (12 ; 12') agencé dans le boîtier (1 ; 1').

18. Sorbetière selon l'une des revendications 1 à 16, **caractérisée en ce que** le mécanisme d'entraînement comporte un axe d'entraînement.

## Patentansprüche

1. Eismaschine mit einem Flügel (30a, 30b'), der in einem doppelwandigen Behälter (20a, 20b') angeordnet ist, und einem Gehäuse (1, 1'), das einen Antriebsmechanismus (10, 10') enthält, der imstande ist, eine Drehbewegung des Flügels (30a, 30b') in Bezug auf den doppelwandigen Behälter (20a, 20b') zu erzeugen, wobei der doppelwandige Behälter (20a, 20b') eine Außenwand (23, 23') und eine Innenwand (24, 24') umfasst, die eine Kammer (25, 25') definieren, die ein Gemisch mit sich verändernder Phase enthält, das einen Schmelzbereich aufweist, der zumindest teilweise unter 0°C liegt, wobei die Innenwand (24, 24') ein Gefäß (26, 26') bildet, wobei der Flügel (30a, 30b') dafür vorgesehen ist, an der Innenwand (24, 24') zu schaben, wobei das Gehäuse (1, 1') eine Halterung (51a, 51b') umfasst, wobei der Flügel (30a, 30b') an der Halterung (51 a, 51 b') montiert ist, **dadurch gekennzeichnet, dass** das Gehäuse (1, 1') einen Sockel (2a, 2b') bildet, dass die Halterung (51a, 51b') oberhalb des Sockels (2a, 2b') angeordnet ist und dass der Antriebsmechanismus (10, 10') einen Antriebsausgang (11a, 11b') aufweist, der sich auf dem Sockel (2a, 2b') befindet und mit einem Antriebsorgan (22, 22') des doppelwandigen Behälters (20a, 20b') zusammenwirkt.

2. Eismaschine nach Anspruch 1, **dadurch gekennzeichnet, dass** die Halterung (51 a, 51 b') durch einen Haltearm (5a, 5b) gebildet wird.

3. Eismaschine nach einem der Ansprüche 1 oder 2, **dadurch gekennzeichnet, dass** das Gehäuse (1, 1') gegenüber dem Sockel (2a, 2b') eine seitliche Öffnung (6a, 6b') aufweist, die für das Einsetzen oder das Abnehmen des Arbeitsbehälters (20a, 20b') vorgesehen ist.

4. Eismaschine nach einem der Ansprüche 1 bis 3, **dadurch gekennzeichnet, dass** das Gehäuse (1, 1') gegenüber dem Sockel (2a, 2b') eine obere Öffnung (2a, 2b') aufweist, die für das Einsetzen oder das Abnehmen des Flügels (30a, 30b') vorgesehen ist.

5. Eismaschine nach einem der Ansprüche 1 bis 4, **dadurch gekennzeichnet, dass** der Flügel (30a, 30b') in Bezug auf den doppelwandigen Behälter (20a, 20b') exzentrisch angeordnet ist.

6. Eismaschine nach einem der Ansprüche 1 bis 5, **dadurch gekennzeichnet, dass** der Flügel (30a, 30b') eine Form aufweist, die an die Form der Innenwand (24, 24') angepasst ist.

7. Eismaschine nach einem der Ansprüche 1 bis 6, **dadurch gekennzeichnet, dass** die untere Hälfte des Gefäßes (26, 26') eine ringförmige Bahn (40, 40') definiert und dass der Flügel (30a, 30b') ein Ende aufweist (36, 36'), das dafür ausgelegt ist, an der ringförmigen Bahn (40, 40') zu schaben.

8. Eismaschine nach einem der Ansprüche 1 bis 7, **dadurch gekennzeichnet, dass** der Flügel (30b') in dem doppelwandigen Behälter (20b') unter einem spitzen Winkel (A) zu der Senkrechten zur Innenwand (24') angeordnet ist.

9. Eismaschine nach einem der Ansprüche 1 bis 8, **dadurch gekennzeichnet, dass** der Flügel (30a, 30b') einen Stiel (31 a, 31 b') aufweist, der in einem Arbeitsrückhalte-Formteil (7a, 7b') des Gehäuses (1, 1') in Eingriff gebracht werden kann.

10. Eismaschine nach Anspruch 9, **dadurch gekennzeichnet, dass** der Stiel (31 a, 31 b') quer zur Drehachse des doppelwandigen Behälters (20a, 20b') in dem Arbeitsrückhalte-Formteil (7a, 7b') in Eingriff gebracht wird.

11. Eismaschine nach einem der Ansprüche 9 oder 10, **dadurch gekennzeichnet, dass** der Stiel (31a, 31b') mit Mitteln (37, 37') zur axialen Blockierung des Flügels (30a, 30b') in Bezug auf das Gehäuse (1, 1') ausgestattet ist.

12. Eismaschine nach einem der Ansprüche 9 bis 11, **dadurch gekennzeichnet, dass** der Stiel (31 a, 31 b') mit Mitteln (38, 38') zur Blockierung in Querrichtung des Flügels (30a, 30b') in Bezug auf das Gehäuse (1, 1') ausgestattet ist.

13. Eismaschine nach einem der Ansprüche 1 bis 12, **dadurch gekennzeichnet, dass** die Außenwand (23, 23') und die Innenwand (24, 24') aus Kunststoff bestehen.

14. Eismaschine nach einem der Ansprüche 1 bis 13, **dadurch gekennzeichnet, dass** das Volumen des Gefäßes (26, 26') höchstens 200 ml beträgt.

15. Eismaschine nach Anspruch 14, **dadurch gekennzeichnet, dass** das Volumen des Gefäßes (26, 26') zwischen 80 und 120 ml beträgt.

16. Eismaschine nach einem der Ansprüche 1 bis 15, **dadurch gekennzeichnet, dass** sie einen zweiten Flügel (30b, 30a') umfasst, der in einem zweiten doppelwandigen Behälter (20b, 20a') angeordnet ist, wobei der Antriebsmechanismus (10, 10') dafür ausgelegt ist, eine Drehbewegung des zweiten Flügels (30b, 30a') in Bezug auf den zweiten doppelwandigen Behälter (20b, 20a') auszuführen.

17. Eismaschine nach einem der Ansprüche 1 bis 16, **dadurch gekennzeichnet, dass** der Antriebsmechanismus (10, 10') zu einem Motor (12, 12') gehört, der sich in dem Gehäuse (1, 1')befindet.

18. Eismaschine nach einem der Ansprüche 1 bis 16, **dadurch gekennzeichnet, dass** der Antriebsmechanismus eine Antriebsachse umfasst.

## Claims

1. Ice cream machine comprising a blade (30a, 30b') arranged in a double-walled container (20a, 20b'), and a box (1, 1') containing a drive mechanism (10, 10') adapted to generate a movement of rotation of the blade (30a, 30b') relative to the double-walled container (20a, 20b'), the double-walled container (20a, 20b') having an outer wall (23, 23') and an inner wall (24, 24') defining a housing (25, 25') containing a phase change mixture having a melting range which extends at least partially below 0 °C, the inner wall (24, 24') forming a tank (26, 26'), the blade (30a, 30b') being designed to scrape the inner wall (24, 24'), the box (1, 1') comprising a support member (51a, 51b'), the blade (30a, 30b') being mounted on the support member (51a, 51b'), **characterised in that** box (1, 1') forms a base (2a, 2b'), **in that** the support member (51a, 51 b') extends above the base (2a, 2b'), and **in that** the drive mechanism (10, 10') comprises a drive outlet (11a, 11b') arranged on the base (2a, 2b') and cooperating with a drive member (22, 22') of the double-walled container (20a, 20b').

2. Ice cream maker according to claim 1, **characterised in that** the support member (51 a, 51 b') is formed by a support arm (5a, 5b').

3. Ice cream maker according to claim 1 or 2, **characterised in that** the box (1, 1') presents with respect to the base (2a, 2b') a lateral opening (6a, 6b') provided to fit or remove the working receptacle (20a, 20b').

4. Ice cream maker according to one of claims 1 to 3, **characterised in that** the box (1, 1') presents with respect to the base (2a, 2b') an upper opening (70a, 70b') provided to fit or remove the blade (30a, 30b').

5. Ice cream maker according to one of claims 1 to 4, **characterised in that** the blade (30a, 30b') is offset with respect to the double-walled container (20a, 20b').

6. Ice cream maker according to one of claims 1 to 5, **characterised in that** the blade (30a, 30b') has a shape matching the shape of the inner wall (24, 24').

7. Ice cream maker according to one of claims 1 to 6, **characterised in that** a lower half of the tank (26, 26') defines an annular path (40, 40') and **in that** the blade (30a, 30b') has an end (36, 36') designed to scrape the annular path (40, 40').

8. Ice cream maker according to one of claims 1 to 7, **characterised in that** the blade (30b') is arranged in the double-walled container (20b') with an acute angle (A) with respect to the perpendicular to the inner wall (24').

9. Ice cream maker according to one of claims 1 to 8, **characterised in that** the blade (30a, 30b') comprises a handle (31 a, 31 b') capable of being engaged in a work retaining conformation (7a, 7b') of the box (1, 1').

10. Ice cream maker according to claim 9, **characterised in that** the handle (31 a, 31 b') is engaged in the work retaining conformation (7a, 7b') transversely with respect to the axis of revolution of the double-walled container (20a, 20b').

11. Ice cream maker according to claim 9 or 10, **characterised in that** the handle (31a, 31b') has axial means (37, 37') for blocking the blade (30a, 30b') relative to the box (1, 1').

12. Ice cream maker according to one of claims 9 to 11, **characterised in that** the handle (31 a, 31 b') has transverse means (38, 38') for blocking the blade (30a, 30b') relative to the box (1, 1').

13. Ice cream maker according to one of claims 1 to 12, **characterised in that** the outer wall (23, 23') and the inner wall (24, 24') are made of plastic.

14. Ice cream maker according to one of claims 1 to 13, **characterised in that** the volume of the tank (26, 26') is less than or equal to 200 mL.

15. Ice cream maker according to claim 14, **characterised in that** the volume of the tank (26, 26') is between 80 mL and 120 mL.

16. Ice cream maker according to one of claims 1 to 15, **characterised in that** it comprises a second blade (30b, 30a') arranged in a second double-walled container (20b, 20a'), the drive mechanism (10, 10') being adapted to rotate the second blade (30b, 30a') with respect to the second double-walled container (20b, 20a').

17. Ice cream maker according to one of claims 1 to 16, **characterised in that** the drive mechanism (10, 10') is associated with a motor (12, 12') arranged in the box (1, 1').

18. Ice cream maker according to one of claims 1 to 16, **characterised in that** the drive mechanism comprises a drive shaft.
